# FASCICULE DE BREVET EUROPEEN

(11) **EP 0 694 027 B1**
(45) Date de publication et mention de la délivrance du brevet: **29.10.1997**
(21) Numéro de dépôt: 94904214.7
(22) Date de dépôt: 10.01.1994
(51) Int. Cl.: C02F 5/02, C02F 1/28, C02F 1/52, B01J 23/32, B01J 27/10

(54) **INSTALLATION ET PROCEDE DE DECARBONATATION ET DE DETARTRAGE EN CONTINU D'EAUX BRUTES CALCAIRES EN pH NEUTRE**
ANLAGE UND VERFAHREN ZUR KONTINUIERLICHEN ENTKARBONISIERUNG UND ENTHÄRTUNG VON ROHWASSER UNTER NEUTRALEN PH-BEDINGUNGEN
APPARATUS AND METHOD FOR CONTINUOUSLY DECARBONATING AND DELIMING UNTREATED PH-NEUTRAL CALCAREOUS WATER

(30) Priorité: 11.01.1993 FR 9300169
(43) Date de publication de la demande: 31.01.1996
(73) Titulaire: SOCIETE EUROPEENNE D'EPURATION, F-78680 Epone (FR)
(72) Inventeur: JEGOU DU LAZ, Olivier, F-78000 Les Yvelines (FR)
(86) Numéro de dépôt international: FR9400025
(87) Numéro de publication internationale: WO9415880

(56) Documents cités:
- EP-A- 0 214 577
- DE-A- 2 159 774
- DE-A- 3 631 218
- FR-A- 2 453 114

## Description

La présente invention concerne un procédé de décarbonatation et de détartrage en continu d'eaux brutes calcaires en pH neutre.

Dans de nombreuses régions, les eaux brutes sont chargées en sel notamment de calcium ou de magnésium et ont une teneur importante en ions bicarbonate HC0₃- (eaux calcaires ou dures) qui, dans certaines conditions, notamment suite à une élévation de la température, ont tendance à précipiter sous forme de carbonates, notamment de carbonate de calcium très peu soluble, qui constitue le tartre.

Or, il est bien connu que les dépôts de tartre, qui tendent à la longue à boucher les canalisations, sont source d'inconvénients importants et peuvent perturber, dans une large mesure, le fonctionnement des chaudières ou autres installations de chauffage, humidification ou climatisation.

Comme mentionné à titre d'exemple dans l'ouvrage de Degrémont "Mémento Technique de l'eau" (1972) page 334, on a déjà proposé divers moyens d'élimination du tartre, tels que par exemple traitement à l'acide chlorhydrique, aux ultrasons, voire des traitements mécaniques, notamment par des 25 fraises rotatives.

Il s'agit cependant là de traitements lourds et onéreux, dont la mise en oeuvre est souvent incommode, et il serait souhaitable de pouvoir disposer d'un procédé non corrosif de nature à décarbonater en continu les eaux brutes et à éviter "à la source" la formation de tartre.

L'invention a pour objet un tel procédé.

Celui-ci est caractérisé en ce que, dans une première étape, on fait passer l'eau à traiter sous pression au travers d'une masse catalytique constituée par des granulés organo-métalliques enserrés dans une première cartouche de façon à réduire les carbonates en gaz carbonique et à floculer les sels calcaires, et dans une seconde étape, on introduit le mélange gaz carbonique/eau décarbonatée dans une seconde cartouche filtrante renfermant du charbon actif oxygéné de façon à reprécipiter le gaz carbonique en carbonates et à obtenir de l'eau épurée.

La caractéristique essentielle de ce procédé est d'être, dans sa totalité, mis en oeuvre en milieu pH neutre, donc non corrosif.

La masse catalytique contient, préférentiellement, du chlorure de calcium, du chlorure ferrique et des oxydes de manganèse.

Le rôle du chlorure de calcium consiste à agir conjointement avec l'oxygène dissous toujours présent en quantité suffisante dans l'eau à traiter pour transformer les carbonates en gaz carbonique ; celui-ci est immédiatement expulsé de la première cartouche pour être recueilli dans la seconde au niveau de laquelle il se trouve reprécipité sous forme de carbonates. Cette action peut s'opérer aussi bien sur les carbonates de calcium (eaux dures) que sur les carbonates de magnésium ou de sodium (eaux adoucies).

Conformément à l'invention, l'action de réduction est complétée par une action de floculation: celle-ci est générée par la formation du gaz carbonique qui provoque la déstabilisation et l'éclatement des particules de calcaire dont les charges électriques superficielles sont neutralisées sous l'action du chlorure ferrique et des oxydes de manganèse contenus dans la première cartouche ; les sels calcaires se regroupent alors en flocs de particules très expansées et très légères qui peuvent facilement être éliminées par rinçage.

Il est à noter que cette action de floculation peut se poursuivre au niveau de la seconde cartouche grâce au charbon actif contenu dans celle-ci.

L'effet détartrant se prolonge même après le passage de l'eau dans les deux cartouches, et ce, pendant un temps relativement long car l'eau sortant de la seconde cartouche garde encore du gaz carbonique résiduel et est également chargée d'oxygène élémentaire arraché du charbon actif. Le processus réduction/floculation subsiste donc puisque le gaz carbonique continue de réduire les carbonates des dépôts calcaires des tuyauteries et les particules de charbon actif les floculent.

Le procédé conforme à l'invention permet donc de réaliser une décarbonatation et un détartrage en continu et en milieu neutre d'une installation consommant régulièrement de l'eau ; cette action est, en outre, complétée par une action anti-algues : le procédé conforme à l'invention permet en effet d'entraver la prolifération des algues aérobies en détériorant leur métabolisme.

Conformément à l'invention, on a pu obtenir des résultats particulièrement satisfaisants en mettant en oeuvre une masse ayant une densité apparente d'environ 1,00 correspondant à une masse d'environ 1 000 kg/m³ et se présentant sous forme de billes dures et homogènes régulièrement calibrées de 1,5 à 2 mm de diamètre.

A titre d'exemple, on peut utiliser à cet effet des billes catalytiques qui sont actuellement proposées sur le marché pour le traitement d'eaux ferrugineuses exemptes de calcaire et renferment essentiellement les composés suivants : Fe₂O₃, CaCl₂ et Ca₃Mn₂Si₃O₁₂.

L'invention se rapporte également à une installation permettant la mise en oeuvre du procédé susmentionné.

Cette installation est caractérisée en ce qu'elle est constituée par deux cartouches montées en série et réunies par une tubulure permettant le passage de l'eau à traiter, à savoir d'une part, une première cartouche en un matériau non poreux résistant à la pression renfermant la masse catalytique et, d'autre part, une seconde cartouche en un matériau poreux renfermant le charbon actif.

Selon une autre caractéristique de l'invention, la seconde cartouche est constituée par un cylindre, notamment en matériau synthétique, dans lequel le mélange gaz carbonique/eau décarbonatée provenant de la première cartouche est introduit à la fois par le bas et radialement.

Selon une autre caractéristique de l'invention, la seconde cartouche est montée à la partie médiane d'un récipient, notamment en matière synthétique, de façon à définir à sa périphérie un manchon recevant l'eau à traiter.

Une telle configuration qui n'est bien entendu pas limitative de l'invention s'est révélée particulièrement avantageuse à la fois pour des raisons d'efficacité de facilité au niveau de la fabrication et de prix de revient.

Selon une autre caractéristique de l'invention, il est préférable de réaliser la première cartouche en un matériau opaque de sorte que la lumière du jour ne puisse pas altérer la masse catalytique, notamment l'oxyde ferrique contenu dans celle-ci, et de ce fait diminuer sa puissance réductrice.

Selon une première variante de l'invention, plus spécialement destinée au traitement de débit d'eau relativement faibles, la première cartouche est constituée par un cylindre notamment en matériau synthétique rempli entièrement par la masse catalytique et destiné à être parcouru de bas en haut par l'eau à traiter.

Les dimensions de la première cartouche, tout code celles de la seconde cartouche, peuvent bien entendu être quelconques sans pour cela sortir du cadre de l'invention ; on a néanmoins pu vérifier par l'expérience que des cartouches cylindriques ayant environ 20 centimètres de hauteur et 7 centimètres de diamètre permettent de traiter des installations alimentées par des canalisations classiques et consommant régulièrement de l'eau.

Selon une autre caractéristique de cette première variante de l'invention, la première cartouche est munie à sa partie inférieure d'un orifice d'entrée de l'eau à traiter coopérant le cas échéant avec une crépine et à sa partie supérieure d'un orifice de sortie situé directement en aval d'un tamis, notamment en une mousse synthétique, dans le sens de circulation de cette eau.

Selon une autre caractéristique de cette première variante de l'invention; la première cartouche est montée à la partie médiane d'un récipient, notamment en matière synthétique, de façon à définir à sa périphérie un manchon recevant l'eau à traiter.

Il est essentiel dans le cadre de l'invention que la première cartouche soit complètement remplie par la masse catalytique, et ce, jusqu'au filtre, sans possibilité de rétention d'eau à sa partie supérieure : en effet, en cas de remplissage partiel, le gaz carbonique formé se retransformerait en boue carbonatée visqueuse qui ne pourrait pas passer par le filtre mousse et séjournerait donc dans la cartouche en gênant considérablement le passage de l'eau et en empêchant par suite l'installation de fonctionner correctement.

De plus, étant donné que la masse catalytique occupe la quasi totalité du volume de la première cartouche, le gaz carbonique dégagé par la réduction des carbonates ne peut, en réalité, se former qu'à l'extérieur de celle-ci. Il est donc, par la dilatation même résultant de sa formation, propulsé très violemment et librement dans la seconde cartouche, en mini-explosion, dès sa sortie de la première cartouche ; en raison de sa force, ce gaz carbonique pénètre très profondément dans le charbon actif, et ce, d'autant plus facilement que les parois de la seconde cartouche, constituées notamment par un tissu synthétique, sont poreuses et que l'introduction du gaz s'effectue à la fois par le bas et radialement, ce qui diminue la résistance au flux gazeux ainsi introduit. Celui-ci se trouve alors immédiatement et solidement adsorbé par le charbon actif et définitivement réoxydé en carbonates par l'oxygène de celui-ci.

Selon une seconde variante de l'invention, plus spécialement destinée au traitement de débits d'eau importants, la première cartouche est constituée par un récipient cylindrique, notamment en un matériau synthétique renfermant, d'une part, une série de tubes de filtration remplis entièrement par la masse catalytique montés entre deux plateaux perforés et destinés à être parcourus de haut en bas par l'eau à traiter et, d'autre part, un tube de distribution central monté parallèlement aux tubes de filtration, destiné à être parcouru de bas en haut par le mélange gaz carbonique/eau décarbonaté provenant de ces tubes et relié à la tubulure de passage.

Cette seconde variante de l'invention dans laquelle le flux de l'eau s'écoulant au travers de la première cartouche est inversé par rapport à la première variante présente l'avantage de permettre la mise en place dans la première cartouche de nombreux tubes de filtration, autour du tube de distribution central, ce qui permet d'obtenir une puissance de traitement plus grande adaptée à des débits d'eau importants.

Selon une autre caractéristique de cette seconde variante de l'invention, la première cartouche est munie à sa partie supérieure d'un orifice d'entrée de l'eau à traiter coopérant le cas échéant avec une crépine.

A partir de cet orifice d'entrée, l'eau à traiter passe automatiquement dans les tubes de filtration pour ressortir à la partie inférieure du récipient cylindrique d'où elle remonte dans le tube de distribution avant d'être transférée dans la seconde cartouche dont la configuration est identique dans les deux variantes de l'invention.

Selon une autre caractéristique de cette seconde variante de l'invention, le tube de distribution est muni à sa partie inférieure d'un tamis notamment en une mousse synthétique.

L'invention permet ainsi de réaliser la décarbonatation de façon permanente en milieu pH neutre, sans qu'au cours de cette opération presque instantanée, aucun acide ni aucune base libre n'ait eu le temps de se dégager.

Selon une autre caractéristique de l'invention, il peut être utile, notamment dans le cas d'eau très calcaire, de munir la première cartouche d'un purgeur d'air permettant d'évacuer manuellement ou automatiquement les gaz provenant de la décomposition des carbonates.

La présence de ce purgeur d'air permet de diminuer la saturation de la seconde cartouche.

Les caractéristiques du procédé ainsi que de l'installation qui font l'objet de l'invention, seront décrites plus en détail en se référant aux dessins annexés dans lesquels :
- la figure 1 est une coupe schématique d'une première variante de l'installation,
- la figure 2 est un schéma représentant la première cartouche d'une deuxième variante de l'installation.

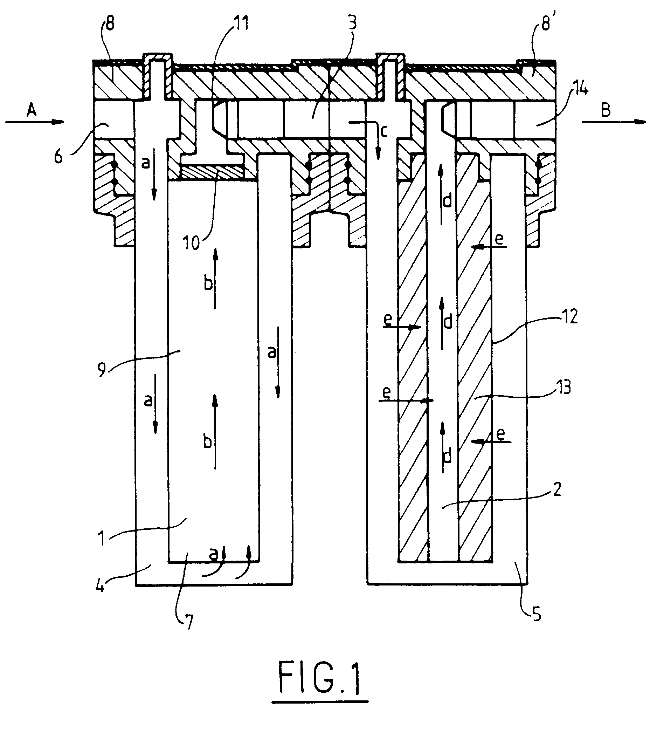

Selon la figure 1, l'installation est constituée par deux cartouches cylindriques 1 et 2 montées en série et réunies à leur partie supérieure par une tubulure 3 permettant le passage de l'eau à traiter.

Les cartouches 1 et 2 qui ont une hauteur d'environ 20 cm et un diamètre d'environ 7 cm, sont respectivement montées à la partie médiane de récipients 4, 5 fermés par des couvercles 8, 8' de façon à définir à leur périphérie des manchons recevant l'eau à traiter. Celle-ci pénètre dans le récipient 4 au travers du couvercle 8 selon la flèche A par une ouverture 6 puis s'écoule autour de la cartouche selon les flèches a avant de pénétrer dans celle-ci par un orifice d'entrée 7, coopérant avec une crépine non représentée, prévu à sa partie inférieure.

La cartouche 1 est munie de parois opaques en un matériau non poreux résistant a la pression et est entièrement garnie à sa partie interne d'une masse catalytique 9 se présentant sous la forme de billes et contenant du chlorure de calcium, du chlorure ferrique ainsi que des oxydes de manganèse. Ces billes occupent la quasi totalité du volume interne de la cartouche 1.

La cartouche 1 est, par ailleurs, fermée à sa partie supérieure par un tamis en mousse synthétique 10 situé directement en amont d'un orifice de sortie 11 directement relié à la tubulure 3.

L'eau carbonatée qui pénètre selon les flèches a par l'orifice d'entrée 7 à la partie inférieure de la cartouche 1 se déplace dans celle-ci de bas en haut selon les flèches b pour ressortir par l'orifice de sortie 11 et pénétrer dans la tubulure 3.

Les carbonates présents dans cette eau se trouvent réduits de façon quasi instantanée en gaz carbonique sous l'action de la masse catalytique 9 et sont propulsés violemment et librement en mini explosion dans la tubulure 3 puis dans le récipient 5 entourant la seconde cartouche 2.

A cette réduction, se superpose une floculation provoquée par l'éclatement sous l'effet du gaz carbonique des particules de calcaire contenues dans l'eau à traiter ; celles-ci se groupent en flocs sous l'action du chlorure ferrique et des oxydes de manganèse contenus dans la masse catalytique.

Selon la figure 1, la seconde cartouche 2 est constituée par un tissu poreux 12 renfermant, à sa périphérie interne, une charge 13 de charbon actif oxygéné.

Compte tenu de ce caractère poreux, le mélange gaz carbonique/eau décarbonatée introduit dans le récipient 5 selon la flèche c peut pénétrer à l'intérieur du charbon actif à la fois par la partie inférieure de la cartouche 2 selon les flèches d, et radialement au travers de la paroi poreuse 12 selon les flèches e. Le gaz carbonique est alors solidement adsorbé sur le charbon actif et immédiatement oxydé sur celui-ci sous la forme de carbonate solide. L'eau décarbonatée peut alors sortir librement par une ouverture 14 prévue à cet effet à la partie supérieure de la cartouche 2 au travers du couvercle 8'.

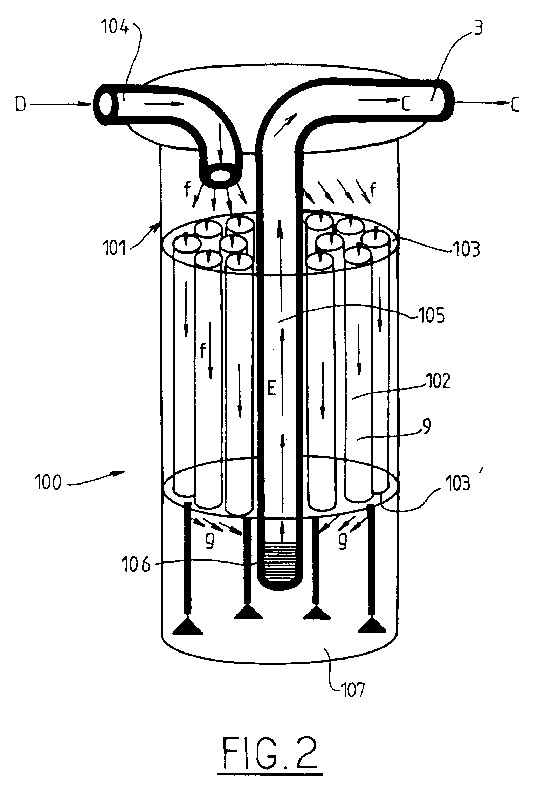

Selon la figure 2, la première cartouche 100 est constituée par un récipient cylindrique 101 muni, à sa partie supérieure d'un orifice 104 d'introduction de l'eau à traiter selon la flèche D et renfermant à sa partie interne une série de tubes de filtration 102 en un matériau opaque non poreux montés parallèlement entre deux plateaux 103, 103'.

Les plateaux 103, 103' sont dimensionnés et fixés à la périphérie interne du récipient 101 de façon à ne laisser aucun espace libre autre que les perforations de sorte que l'eau provenant de l'orifice d'entrée 104 et s'écoulant selon les flèches f passe obligatoirement dans les tubes de filtration 102 qui sont donc parcourus de haut en bas par l'eau à traiter.

Ces tubes de filtration 102 sont entièrement remplis par la masse catalytique 9 qui est maintenue entre les plateaux 103, 103' par des crépines non représentées sur la figure 2.

Le récipient cylindrique 101 renferme, dans sa partie médiane, un tube de distribution central 105 monté parallèlement aux tubes de filtration 102 et qui est muni à sa partie inférieure d'un tamis en une mousse synthétique 106.

Le tube de distribution central 105 est relié à sa partie supérieure à la tubulure de passage 3 qui permet sa liaison avec la seconde cartouche 2 dont la configuration est similaire à celle représentée sur la figure 1.

L'eau quittant les tubes de filtration 102 par les flèches g se rassemble à la partie inférieure 107 du récipient 101 d'où elle passe selon les flèches E dans le tube de distribution central 105 qu'elle parcourt de bas en haut avant de pénétrer dans la tubulure de passage 3 puis dans la seconde cartouche 2.

Le récipient 101 peut, par ailleurs, renfermer un purgeur d'air non représenté permettant d'évacuer manuellement ou automatiquement les gaz formant suite à la décarbonatation pour éviter la saturation de la seconde cartouche.

## Revendications

1. Procédé de décarbonatation et de détartrage en continu d'eau brute calcaire en pH neutre caractérisé en ce que, dans une première étape, on fait passer l'eau à traiter sous pression au travers d'une masse catalytique constituée par des granulés organo-métalliques remplissant tout le volume d'une première cartouche de façon à réduire les carbonates en gaz carbonique et à floculer les sels calcaires, et dans une seconde étape, on introduit le mélange gaz carbonique/eau décarbonatée dans une seconde cartouche filtrante renfermant du charbon actif oxygéné de façon à reprécipiter le gaz carbonique en carbonate et à obtenir de l'eau épurée.

2. Procédé selon la revendication 1, caractérisé en ce que la masse de catalytique contient du chlorure de calcium, du chlorure ferrique et des oxydes de manganèse.

3. Procédé selon l'une quelconque des revendications 1 et 2, caractérisé en ce que la masse catalytique se présente sous forme de billes dures et homogènes régulièrement calibrées de 1,5 à 2 mm de diamètre.

4. Procédé selon l'une quelconque des revendications 1 à 3, caractérisé en ce que la masse catalytique a une densité apparente d'environ 1,00 correspondant à une masse d'environ 1 000 kg/m³.

5. Installation pour la mise en oeuvre du procédé selon l'une quelconque des revendications 1 à 4, caractérisée en ce qu'elle est constituée par deux cartouches (1, 100, 2) montées en série et réunies par une tubulure (3) permettant le passage de l'eau à traiter, à savoir d'une part une première cartouche (1, 100) en un matériau non poreux résistant à la pression complètement remplie par la masse catalytique (9), et d'autre part une seconde cartouche (2) en un matériau poreux renfermant le charbon actif (13).

6. Installation selon la revendication 5, caractérisée en ce que la seconde cartouche (2) est constituée par un cylindre notamment en matériau synthétique dans lequel le mélange gaz carbonique/eau décarbonatée provenant de la première cartouche (1, 100) est introduit à la fois par le bas et radialement.

7. Installation selon l'une quelconque des revendications 5 et 6, caractérisée en ce que la seconde cartouche (2) est montée à la partie médiane d'un récipient (5) notamment en matière synthétique de façon à définir à sa périphérie un manchon recevant l'eau à traiter.

8. Installation selon l'une quelconque des revendications 5 à 7, caractérisée en ce que la première cartouche (1, 100) est en un matériau opaque.

9. Installation selon l'une quelconque des revendications 5 à 8, caractérisée en ce que la première cartouche (1) est constituée par un cylindre, notamment en matériau synthétique rempli entièrement par la masse catalytique (9) et destiné à être parcouru de bas en haut par l'eau à traiter.

10. Installation selon la revendication 9, caractérisée en ce que la première cartouche (1) est munie à sa partie inférieure d'un orifice d'entrée (7) de l'eau à traiter coopérant, le cas échéant, avec une crépine et à sa partie supérieure d'un orifice de sortie (11) situé directement en aval d'un tamis (10) notamment en une mousse synthétique dans le sens de circulation de cette eau.

11. Installation selon la revendication 10, caractérisée en ce que la première cartouche (1) est 35 montée à la partie médiane d'un récipient (4), notamment en matière synthétique de façon à définir à sa périphérie un manchon recevant l'eau à traiter.

12. Installation selon l'une quelconque des revendications 5 à 8, caractérisée en ce que la première cartouche (100) est constituée par un récipient cylindrique (101), notamment en un matériau synthétique renfermant, d'une part, une série de tubes ,de filtration (102) remplis entièrement par la masse catalytique (9), montés entre deux plateaux perforés (103, 103') et destinés à être parcourus de bas en haut par l'eau à traiter et, d'autre part, un tube de distribution central (105) monté parallèlement aux tubes de filtration (102), destiné à être parcouru de bas en haut par le mélange gaz carbonique/eau décarbonatée provenant de ces tubes et relié à la tubulure de passage (3).

13. Installation selon la revendication 12, caractérisée en ce que la première cartouche (100) est munie, à sa partie supérieure, d'un orifice d'entrée (104) de l'eau à traiter coopérant, le cas échéant, avec une crépine.

14. Installation selon l'une quelconque des revendications 12 et 13, caractérisée en ce que le tube de distribution (105) est muni à sa partie inférieure d'un tamis notamment en une mousse synthétique (106).

15. Installation selon l'une quelconque des revendications 5 à 14, caractérisée en ce que la première cartouche (1, 100) est munie d'un purgeur d'air permettent d'évacuer manuellement ou automatiquement les gaz provenant de la décomposition des carbonates.

## Claims

1. A process for continuous removal of carbonates and scale from untreated hard water at neutral pH, a characteristic feature of which is that the first stage in the process is to pass the water under pressure through a catalytic material composed of organo-metallic granules with which a first cartridge is entirely filled in such a manner as to reduce the carbonates into carbon dioxide and to flocculate the calcium salts, the second stage being to introduce the mixture of carbon dioxide and carbonate-free water into a second filtration cartridge containing oxygenated active carbon in such a manner as to precipitate the carbon dioxide back out in carbonate form and to obtain purified water thereby.

2. A process as described in Claim 1 of which a characteristic feature is that the catalytic material contains calcium chloride, ferric chloride and manganese oxides.

3. A process as described in either of Claims 1 and 2, and of which a characteristic feature is that the catalytic material is present in the form of hard uniform beads calibrated to a standard diameter of 1.5 to 2 mm.

4. A process as described in any of the Claims 1 to 3 and of which a characteristic feature is that the catalytic material has a relative density of approximately 1.00, which corresponds to a material density of approximately 1000 kg/m3.

5. An installation for the practical application of the process as described in any of the Claims 1 to 4, of which a characteristic feature is that it is composed of two cartridges (1, 100, 2) mounted in series and connected by piping (3) carrying the flow of water to be treated, the installation being comprised on the one hand of a first cartridge (1, 100) manufactured in a non-porous, pressure-resistant material entirely filled whith the catalytic material (9) and, on the other hand, a second cartridge (2) manufactured in a porous material containing the active carbon (13).

6. An installation as described in Claim 5, of which the characteristic feature is that the second cartridge (2) is composed of a cylinder which may be manufactured most notably in a synthetic material in which the mixture of carbon dioxid and carbonate-free water flowing from the first cartridge (1, 100) is introduced both from the bottom and along radial axes.

7. An installation as described in either of the Claims 5 and 6 of which the characteristic feature is that the second cartridge (2) is fitted in the central portion of a container (5), which may be manufactured most notably in a synthetic material, in such a manner that a sleeve is formed around its outer surface to contain the water to be treated.

8. An installation as described in any of the Claims 5 to 7 of which the characteristic feature is that the first cartridge (1, 100) is manufactured in an opaque material.

9. An installation as described in any of the Claims 5 to 8 of which the characteristic feature is that the first cartridge (1) is composed of a cylinder, which may be manufactured most notably in a synthetic material, and which is filled entirely by the catalytic material (9) and through which the water to be treated is intended to flow from bottom to top.

10. An installation as described in Claim 9 of which the characteristic feature is that cartridge (1) possesses at its bottom an inlet (7), which may be fitted if required with a strainer, and into which the water to be treated flows, the inlet being located directly down-stream from a screen filter (10), which may be manufactured most notably in a synthetic material, in the direction of flow of the water.

11. An installation as described in Claim 10 of which the characteristic feature is that the first cartridge (1) is fitted in the central part of a container (4), which may be manufactured most notably in a synthetic material, in such a manner that a sleeve is created around its outer surface to contain the water to be treated.

12. An installation as described in any of the Claims 5 to 8 of which the characteristic feature is that the first cartridge (100) is composed of a cylindrical container (101), which may be manufactured most notably in a synthetic material, containing, firstly, a series of filtration tubes (102) entirely filled whith the catalytic material (9) mounted between two perforated end plates (103,103') and through which the water to be treated is intended to flow from top to bottom and, secondly, a central distribution pipe (105) mounted parallel to the filtration tubes (102) through which the mixture of carbon dioxide and carbonate-free water from the tubes is intended to flow from bottom to top, this disribution pipe being connected to the transfer piping (3).

13. An installation as described in Claim 12 of which the characteristic feature is that the first cartridge (100) possesses at its top an inlet (104) for the water to be treated, which may be fitted if required with a strainer.

14. An installation as described in either of Claims 12 and 13 of which the characteristic feature is that the distribution pipe (105) is fitted at the bottom with a screen filter (106), which may be manufactured most notably in a synthetic material.

15. An installation as described in any of Claims 5 to 14 of which the characteristic feature is that the first (1, 100) possesses an air vent enabling the gases produced by the brakedown of carbonates to be bled off manually or automatically.

## Patentansprüche

1. Verfahren um kontinuierlich und bei neutralem pH-Wert rohe kalkhältige Wässer zu entkarbonisieren und des Kesselsteins zu berauben, dadurch gekennzeichnet, daß unter Netzdruck das Rohwasser zuerst durch eine aus organischen und metallischen Körnchen gebildete Katalysatorsfüllung, die den Gesamtrauminhalt des ersten Filtereinsatzes besetzt, geleitet wird, damit die Karbonate in Kohlensäuregas und das Kalksalz in Flocken aufgehen. In der zweiten Phase wird die Mischung Kohlensäuregas/Entkarbonisierteswasser durch einen zweiten filtrierenden mit sauerstoffhaltiger Aktivkohle gefüllten Filtereinsatz geleitet, um das Kohlensäuregas wieder zu Karbonaten zu fällen und gereinigtes Wasser zu erzeugen.

2. Verfharen nach Anspruch 1.dadurch gekennzeichnet, daß die Katlysatorsfüllung Kalziumchlorid, Ferrochlorid und Manganoxyde enthält.

3. Verfahren nach irgendeinem der Ansprüche 1 und 2, dadurch gekennzeichnet, daß die Katalysatorsfüllung in Form von harten, gleichartigen und regelmäßig kalibrierten Kügelchen von 1,5 bis 2 mm Durchschnitt sich darstellt.

4. Verfahren nach irgendeinem der Ansprüche 1 bis 3, dadurch gekennzeichnet, daß die Katalysatorsfüllung ein spezifisches Gewicht von anscheinend etwa 1,00 besitzt, das einer Masse von ungefähr 1000 kg/m3 entspricht.

5. Vorrichtung zur Durchführung des Verfahrens nach irgendeinem der Ansprüche 1 bis 4,dadurch gekennzeichnet daß sie aus zwei hintereinander geschaltenen Filtereinsätzen (1,100,2) besteht. Sie sind durch eine Röhre (3) verbunden, damit das Rohwasser durchfließen kann; zwar zuerst ein erster aus einem nicht porösen dem Netzdruck widerstehenden Material gebauten Filtereinsatz (1,100), der mit der Katalysatorsfüllung (9) vollständig gefüllt ist; danach ein zweiter aus einem porösen Material gebauten Filtereinsatz (2), der die Aktivkohle (13) enthält.

6. Vorrichtung nach dem Anspruch 5, dadurch gekennzeichnet, daß der zweite Filtereinsatz (2) aus einem insbesondere aus Kunststoff gebauten Zylinder besteht, durch den die aus dem ersten Filtereinsatz (1,100) herausfließende Mischung Kohlensäuregas/Entkarbonisierteswasser von unten nach oben und zugleich seitwärts geleitet wird.

7. Vorrichtung nach irgendeinem der Ansprüche 5 und 6, dadurch gekennzeichnet, daß der zweite Filtereinsatz (2) in der Mitte eines insbesondere aus Kunststoff gebauten Behälters (5) montiert ist, so daß an dessen Peripherie eine Hülle sich bildet, in die das Rohwasser geleitet wird.

8. Vorrichtung nach irgendeinem der Ansprüche 5 bis 7, dadurch gekennzeichnet, daß der erste Filtereinsatz (1, 100) aus einem undurchsichtigen Material gebaut ist.

9. Vorrichtung nach irgendeinem der Ansprüche 5 bis 8, dadurch gekennzeichnet, daß der erste Filtereinsatz (1) aus einem mit der Katalysatorsfüllung (9) vollständig gefüllten insbesondere aus Kunststoff gebauten Zylinder besteht, und dazu bestimmt ist, daß das Rohwasser durch ihn von unten nach oben geleitet wird.

10. Vorrichtung nach dem Anspruch 9, dadurch gekennzeichnet, daß der erste Filtereinsatz (1) am unteren Ende eine Einflußöffnung (7) hat, wodurch das Rohwasser möglichenfalls mit der Mitwirkung eines Siebkopfes hineingeleitet wird und am oberen Ende eine Ausflußöffnung (11), die sich flußabwärts gleich nach einem insbesondere aus Schaumstoff bestehenden Sieb (10) in der Richtung des Wasserkreislaufes befindet.

11. Vorrichtung nach dem Anspruch 10, dadurch gekennzeichnet, daß der erste Filtereinsatz (1) in der Mitte eines insbesondere aus Kunststoff hergestellten Behälters (4) eingebaut ist, so daß an dessen Peripherie eine Hülle sich bildet, in die das Rohwasser geleitet wird.

12. Vorrichtung nach irgendeinem der Ansprüche 5 bis 8 , dadurch gekennzeichnet, daß der erste Filtereinsatz (100) aus einem insbesondere aus Kunststoff hergestellten zylinderförmigen Behälter (101) besteht, in dem sich einerseits eine Reihe von Filtrierungsröhren (102) befinden, diejenige mit der Katalysatorsfüllung (9) vollständig gefüllt und zwischen zwei gelochten Scheiben (103,103') montiert sind. Diese Filtrierungsröhren sind für den Rohwasserdurchfluß von oben nach unten bestimmt. Anderseits befindet sich in diesem Behälter ein mit den Filtrierungsröhren (102) parallel montiertes Zentralverteilungsrohr (105), das für den Durchfluß von unten nach oben der aus den Filtrierungsröhren fließende Mischung Kohlensäuregas/Entkarbonisierteswasser bestimmt und mit dem Übergangsrohr (3) verbunden ist.

13. Vorrichtung nach Anspruch 12, dadurch gekennzeichnet, daß der erste Filtereinsatz (100) am oberen Ende eine möglichenfalls mit einem Siebkopf versehene Rohwassereinflußöffnung (104) besitzt.

14. Vorrichtung nach irgendeinem der Ansprüche 12 und 13, dadurch gekennzeichnet, daß das Verteilungsrohr (105) am unteren Ende ein insbesondere aus Schaumstoff hergestelltes Sieb, besitzt.

15. Vorrichtung nach irgendeinem der Ansprüche 5 bis 14, dadurch gekennzeichnet, daß der erste Filtereinsatz (1,100) mit einem Entlüftungshahn ausgerüstet ist, damit die von der Zersetzung der Karbonate erscheinenden Gase mit der Hand oder automatisch ausgetrieben werden können.
